# EUROPEAN PATENT APPLICATION

(11) **EP 3 979 099 A1**
(43) Date of publication of application: **06.04.2022**
(21) Application number: 20813143.3
(22) Date of filing: 20.04.2020
(51) Int. Cl.: G06F 16/54

(54) **EDITING METHOD AND MOBILE TERMINAL**

(30) Priority: 27.05.2019 CN 201910445162
(71) Applicant: Vivo Mobile Communication Co., Ltd., Dongguan, Guangdong 523860 (CN)
(72) Inventor: ZHOU, Zhuodong, Dongguan, Guangdong 523860 (CN)
(74) Representative: Carangelo, Pierluigi
(86) International application number: PCT/CN2020/085687
(87) International publication number: WO 2020/238477

(57) **Abstract**

The present disclosure provides an editing method and a mobile terminal. The editing method includes: receiving a first input by a user for a first screen, wherein a thumbnail object of at least one to-be-operated object is displayed on the first screen; controlling, in response to the first input, the thumbnail object of the at least one to-be-operated object to be in an editable state; receiving a second input by the user for a first target thumbnail object in the editable state on the first screen; and displaying, in response to the second input, a first target to-be-operated object corresponding to the first target thumbnail object on a second screen.

## Description

### CROSS-REFERENCE TO RELATED APPLICATION

This application claims priority to Chinese Patent Application No. 201910445162.9 filed in China on May 27, 2019, which is incorporated herein by reference in its entirety.

### TECHNICAL FIELD

The present disclosure relates to the technical field of communications application, and in particular, to an editing method and a mobile terminal.

### BACKGROUND

When performing a batch delete operation, a single-screen mobile phone in the related art can usually display only thumbnails of to-be-deleted targets due to a screen size limitation. During batch deletion, usually because content of a to-be-deleted target cannot be seen clearly or complete content of a to-be-deleted target cannot be obtained, a user has to exit a batch deletion state to switch to a normal state so as to view complete target content, and then switch back to the batch deletion state to perform an operation. Such repeated operations are tedious and meanwhile increase a risk of accidental deletion.

### SUMMARY

Embodiments of the present disclosure provide an editing method and a mobile terminal, to solve a problem of tedious operations required during batch deletion for switching between a batch deletion state and a displayed state of a to-be-deleted object.

To solve the foregoing technical problem, the present disclosure is implemented as follows.

According to a first aspect, an embodiment of the present disclosure provides an editing method, applied to a mobile terminal. The mobile terminal includes a first screen and a second screen, and the method includes:
receiving a first input by a user for the first screen, where a thumbnail object of at least one to-be-operated object is displayed on the first screen;
controlling, in response to the first input, the thumbnail object of the at least one to-be-operated object to be in an editable state;
receiving a second input by the user for a first target thumbnail object in the editable state on the first screen; and
displaying, in response to the second input, a first target to-be-operated object corresponding to the first target thumbnail object on the second screen.

According to a second aspect, an embodiment of the present disclosure further provides a mobile terminal, including a first screen and a second screen. The mobile terminal further includes:
a first receiving module, configured to receive a first input by a user for the first screen, where a thumbnail object of at least one to-be-operated object is displayed on the first screen;
a first response module, configured to control, in response to the first input, the thumbnail object of the at least one to-be-operated object to be in an editable state;
a second receiving module, configured to receive a second input by the user for a first target thumbnail object in the editable state on the first screen; and
a second response module, configured to display, in response to the second input, a first target to-be-operated object corresponding to the first target thumbnail object on the second screen.

According to a third aspect, an embodiment of the present disclosure further provides a mobile terminal, including a processor, a memory, and a program stored in the memory and executable on the processor. When the program is executed by the processor, the steps of the editing method described above are implemented.

According to a fourth aspect, an embodiment of the present disclosure further provides a computer-readable storage medium. The computer-readable storage medium stores a program, and when the program is executed by a processor, the steps of the editing method described above are implemented.

The embodiments of the present disclosure have the following beneficial effects:

According to the foregoing technical solutions in the embodiments of the present disclosure, a first input by a user for a first screen is received, where a thumbnail object of at least one to-be-operated object is displayed on the first screen; in response to the first input, the thumbnail object of the at least one to-be-operated object is controlled to be in an editable state; a second input by the user for a first target thumbnail object in the editable state on the first screen is received; and in response to the second input, a first target to-be-operated object corresponding to the first target thumbnail object is displayed on a second screen. In this way, when editing a to-be-operated object, the user can obtain complete information of the to-be-operated object without exiting the editable state, thereby reducing switching operations and meanwhile reducing a risk of accidental deletion.

### BRIEF DESCRIPTION OF DRAWINGS

FIG. 1 is a schematic flowchart of an editing method according to an embodiment of the present disclosure;
FIG. 2 is a schematic diagram of displaying a thumbnail object of at least one to-be-operated object on a first screen according to an embodiment of the present disclosure;
FIG. 3 is a schematic diagram of displaying a first target to-be-operated object on a second screen according to an embodiment of the disclosure;
FIG. 4 is a first schematic diagram of modules of a mobile terminal according to an embodiment of the present disclosure;
FIG. 5 is a second schematic diagram of modules of a mobile terminal according to an embodiment of the present disclosure; and
FIG. 6 is a structural block diagram of a mobile terminal according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

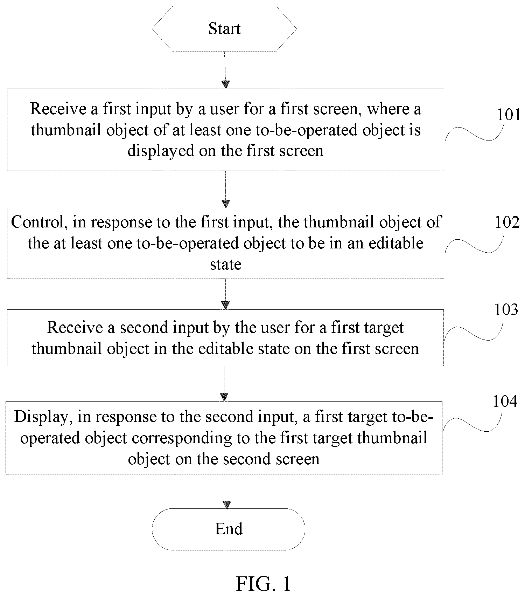

FIG. 1 is a schematic flowchart of an editing method according to an embodiment of the present disclosure. The following describes an implementation process of this method in detail with reference to the figure.

It should be noted that the editing method is applied to a mobile terminal, the mobile terminal includes a first screen and a second screen, and the mobile terminal includes but is not limited to: a mobile phone, a tablet computer, a notebook computer, a palmtop computer, an in-vehicle terminal, a wearable device, and the like. This embodiment of the present disclosure does not limit a quantity of second screens. The editing method may include the following steps.

Step 101: Receive a first input by a user for the first screen, where a thumbnail object of at least one to-be-operated object is displayed on the first screen.

The thumbnail object may be a thumbnail of the to-be-operated object, or the thumbnail object may be a thumbnail including at least partial content of the to-be-operated object, that is, displayed content corresponding to the thumbnail object is partial content or complete content of the to-be-operated object.

A thumbnail object of at least one to-be-operated object is displayed on the first screen, the first screen includes an edit control, for example, an edit button, and the first input may specifically be a tap input by the user for the edit button.

The to-be-operated object may specifically be a short message or a picture. In the case that the to-be-operated object is a short message, the thumbnail object is a thumbnail including at least partial content of the to-be-operated object. Displayed content corresponding to the thumbnail object is partial content or complete content of the to-be-operated object. In the case that the to-be-operated object is a picture, the thumbnail object is a thumbnail of the to-be-operated object. The to-be-operated object may alternatively be a file, an application icon, or the like. This embodiment of the present disclosure does not limit a specific type of the to-be-operated object.

Step 102: Control, in response to the first input, the thumbnail object of the at least one to-be-operated object to be in an editable state.

After the first input is received, the thumbnail object of the at least one to-be-operated object displayed on the first screen is controlled to be in the editable state in response to the first input, so that the user can perform corresponding editing, such as deletion, on the to-be-operated object.

Step 103: Receive a second input by the user for a first target thumbnail object in the editable state on the first screen.

The first target thumbnail object may be one of at least one thumbnail object displayed on the first screen, and the second input may be a long-press input by the user for the first target thumbnail object.

Step 104: Display, in response to the second input, a first target to-be-operated object corresponding to the first target thumbnail object on the second screen.

The first input and the second input may be a long-press input, a tap input, a gesture input, or the like. This embodiment of the present disclosure does not specifically limit a manner of the input.

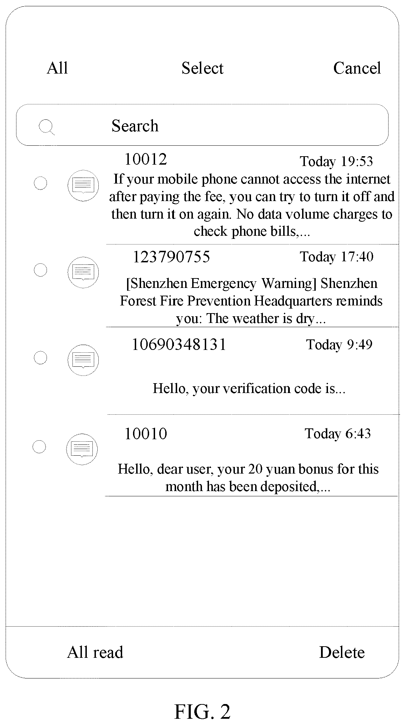

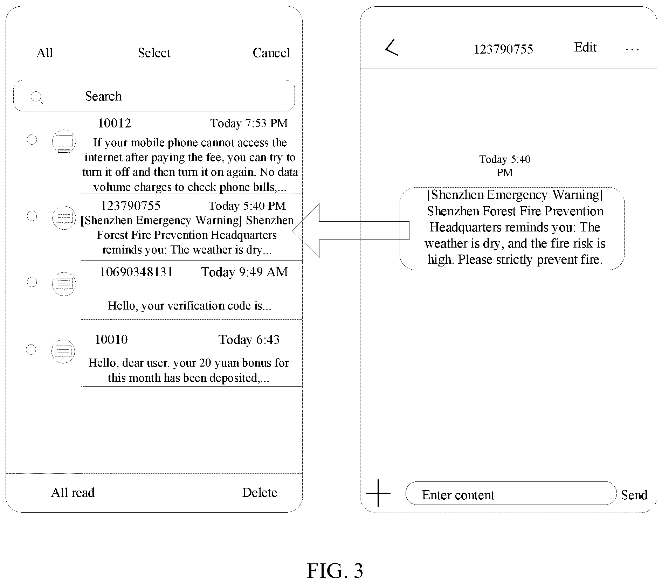

For example, as shown in FIG. 2, in the case that the to-be-operated object is a short message, the first screen displays a thumbnail object of at least one short message, namely, partial content of at least one short message. As shown in FIG. 3, after a second input for a thumbnail object of a first short message is received, complete content of the first short message is displayed on the second screen, so that the user can obtain the complete content of the first short message without exiting the editable state, thereby facilitating viewing by the user.

In the case that the to-be-operated object is a picture, the first screen displays a thumbnail of at least one picture, and after a second input for a first picture is received, an original picture of the first picture is displayed on the second screen.

According to the editing method in this embodiment of the present disclosure, a first input by a user for a first screen is received, where a thumbnail object of at least one to-be-operated object is displayed on the first screen; in response to the first input, the thumbnail object of the at least one to-be-operated object is controlled to be in an editable state; a second input by the user for a first target thumbnail object in the editable state on the first screen is received; and in response to the second input, a first target to-be-operated object corresponding to the first target thumbnail object is displayed on a second screen. In this way, when editing a to-be-operated object, the user can obtain complete information of the to-be-operated object without exiting the editable state, thereby reducing switching operations and meanwhile reducing a risk of accidental deletion.

Optionally, after the displaying, in response to the second input, a first target to-be-operated object corresponding to the first target thumbnail object on second screen, the method further includes:
receiving a third input by the user for a second target thumbnail object on the first screen, where the second target thumbnail object is a thumbnail object selected by the user, based on the first target to-be-operated object, from thumbnail objects displayed on the first screen, and the selected thumbnail object is determined as a second target to-be-operated object; and
performing, in response to the third input, a preset editing operation on the second target to-be-operated object corresponding to the second target thumbnail object.

The third input may be a long-press input, a tap input, a gesture input, or the like. This embodiment of the present disclosure does not specifically limit a manner of the input. In the case that the first input, the second input, and the third input all are gesture inputs, gesture inputs corresponding to the first input, the second input, and the third input are different gesture inputs.

The second target thumbnail object and the first target thumbnail object may be a same target thumbnail object, or may be different target thumbnail objects.

Herein, selecting a to-be-operated object for editing on the first screen after the user obtains all information of the first target to-be-operated object from the second screen can effectively reduce a risk of accidental deletion.

Specifically, the performing, in response to the third input, a preset editing operation on a second target to-be-operated object corresponding to the second target thumbnail object includes:
performing, response to the third input, a delete operation on the second target to-be-operated object corresponding to the second target thumbnail object.

The editing method in this embodiment of the present disclosure makes full use of advantages of multiple screens to obtain complete information of a thumbnail object during batch deletion without complex state switching operations, which facilitates operations and meanwhile reduces a risk of accidental deletion.

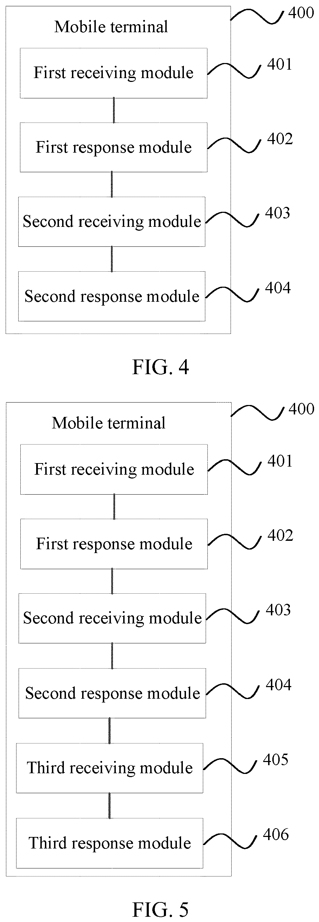

An embodiment of the present disclosure further provides a mobile terminal, including a first screen and a second screen. As shown in FIG. 4, the mobile terminal 400 further includes:
a first receiving module 401, configured to receive a first input by a user for the first screen, where a thumbnail object of at least one to-be-operated object is displayed on the first screen;
a first response module 402, configured to control, in response to the first input, the thumbnail object of the at least one to-be-operated object to be in an editable state;
a second receiving module 403, configured to receive a second input by the user for a first target thumbnail object in the editable state on the first screen; and
a second response module 404, configured to display, in response to the second input, a first target to-be-operated object corresponding to the first target thumbnail object on the second screen.

The mobile terminal in this embodiment of the present disclosure, as shown in FIG. 5, further includes:
a third receiving module 405, configured to after the first target to-be-operated object corresponding to the first target thumbnail object is displayed on the second screen in response to the second input, receive a third input by the user for a second target thumbnail object in the editable state on the first screen; and
a third response module 406, configured to perform, in response to the third input, a preset editing operation on a second target to-be-operated object corresponding to the second target thumbnail object.

According to the mobile terminal in this embodiment of the present disclosure, the third response module 406 is configured to perform a delete operation on the second target to-be-operated object corresponding to the second target thumbnail object.

According to the mobile terminal in this embodiment of the present disclosure, in the case that a to-be-operated object is a short message, the thumbnail object is a thumbnail including at least partial content of the to-be-operated object, or in the case that a to-be-operated object is a picture, the thumbnail object is a thumbnail of the to-be-operated object.

It should be noted that the mobile terminal is a mobile terminal corresponding to the foregoing method embodiment, and all implementations in the foregoing method embodiment are applicable to the embodiment of the mobile terminal, and a same technical effect can also be achieved.

According to the mobile terminal in this embodiment of the present disclosure, a first input by a user for a first screen is received, where a thumbnail object of at least one to-be-operated object is displayed on the first screen; in response to the first input, the thumbnail object of the at least one to-be-operated object is controlled to be in an editable state; a second input by the user for a first target thumbnail object in the editable state on the first screen is received; and in response to the second input, a first target to-be-operated object corresponding to the first target thumbnail object is displayed on a second screen. In this way, when editing a to-be-operated object, the user can obtain complete information of the to-be-operated object without exiting the editable state, thereby reducing switching operations and meanwhile reducing a risk of accidental deletion.

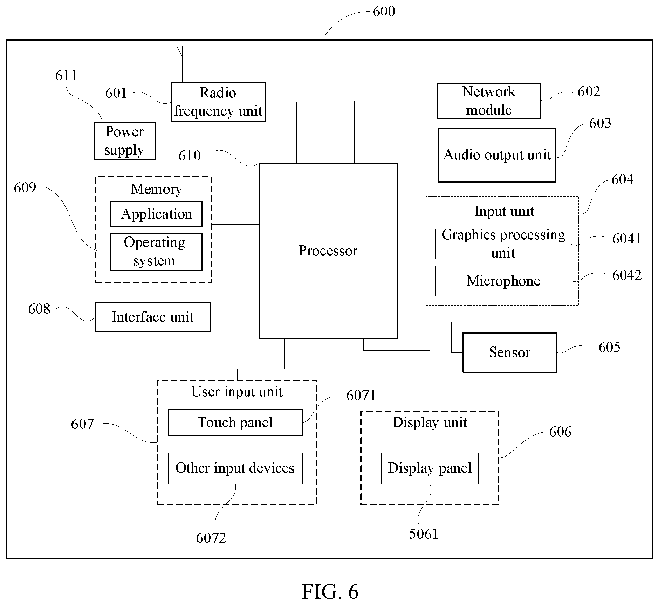

FIG. 6 is a schematic structural diagram of hardware of a mobile terminal for implementing embodiments of the present disclosure. The mobile terminal 600 includes but is not limited to components such as a radio frequency unit 601, a network module 602, an audio output unit 603, an input unit 604, a sensor 605, a display unit 606, a user input unit 607, an interface unit 608, a memory 609, a processor 610, and a power supply 611. A person skilled in the art may understand that the structure of the mobile terminal shown in FIG. 6 constitutes no limitation on the mobile terminal, and the mobile terminal may include more or fewer parts than those shown in the figure, or combine some parts, or have a different part arrangement. In the embodiments of the present disclosure, the mobile terminal includes but is not limited to: a mobile phone, a tablet computer, a notebook computer, a palmtop computer, a vehicle-mounted terminal, a wearable device, a pedometer, or the like.

The processor 610 is configured to receive, through the user input unit 607, a first input by a user for a first screen, where a thumbnail object of at least one to-be-operated object is displayed on the first screen; control, in response to the first input, the thumbnail object of the at least one to-be-operated object to be in an editable state; receive, through the user input unit 607, a second input by the user for a first target thumbnail object in the editable state on the first screen; and displaying, in response to the second input through the display unit 606, a first target to-be-operated object corresponding to the first target thumbnail object on a second screen.

The processor can implement processes of the embodiment of the editing method and achieve a same technical effect. To avoid repetition, details are not described herein again.

According to the foregoing technical solutions in the embodiments of the present disclosure, a first input by a user for a first screen is received, where a thumbnail object of at least one to-be-operated object is displayed on the first screen; in response to the first input, the thumbnail object of the at least one to-be-operated object is controlled to be in an editable state; a second input by the user for a first target thumbnail object in the editable state on the first screen is received; and in response to the second input, a first target to-be-operated object corresponding to the first target thumbnail object is displayed on a second screen. In this way, when editing a to-be-operated object, the user can obtain complete information of the to-be-operated object without exiting the editable state, thereby reducing switching operations and meanwhile reducing a risk of accidental deletion.

It should be understood that in this embodiment of the present disclosure, the radio frequency unit 601 may be configured to receive and transmit information, or receive and transmit a signal during a call. Specifically, the radio frequency unit 601 receives downlink data from a base station, and then transmits the downlink data to the processor 610 for processing; and in addition, transmits uplink data to the base station. Generally, the radio frequency unit 601 includes but is not limited to an antenna, at least one amplifier, a transceiver, a coupler, a low noise amplifier, a duplexer, and the like. In addition, the radio frequency unit 601 may also communicate with other devices through a wireless communication system and network.

The mobile terminal provides a user with wireless broadband internet access by using the network module 602, for example, helping the user receive and send an email, browse a web page, and access streaming media.

The audio output unit 603 can convert audio data received by the radio frequency unit 601 or the network module 602 or stored in the memory 609 into an audio signal, and output the audio signal into sound. Moreover, the audio output unit 603 may further provide audio output (for example, call signal receiving sound and message receiving sound) related to a specific function executed by the mobile terminal 600. The audio output unit 603 includes a loudspeaker, a buzzer, a receiver, and the like.

The input unit 604 is configured to receive audio or video signals. The input unit 604 may include a graphics processing unit (Graphics Processing Unit, GPU) 6041 and a microphone 6042. The graphics processing unit 6041 processes image data of a static picture or video obtained by an image capture apparatus (such as a camera) in a video capture mode or an image capture mode. A processed image frame may be displayed on the display unit 606. The image frame processed by the graphics processing unit 6041 may be stored in the memory 609 (or another storage medium) or sent by using the radio frequency unit 601 or the network module 602. The microphone 6042 can receive a sound, and can process such a sound to obtain audio data. Processed audio data may be converted, in a telephone call mode, into a format that can be sent to a mobile communication base station via the radio frequency unit 601 for output.

The mobile terminal 600 further includes at least one sensor 605, such as a light sensor, a motion sensor, and another sensor. Specifically, the light sensor includes an ambient light sensor and a proximity sensor. The ambient light sensor may adjust luminance of a display panel 6061 based on brightness of ambient light, and the proximity sensor may turn off the display panel 6061 and/or backlight when the mobile terminal 600 approaches an ear. As a type of motion sensor, an accelerometer sensor may detect values of accelerations in various directions (generally three axes), and may detect a value and a direction of gravity when the terminal stays still. The accelerometer sensor may be configured to recognize a terminal posture (for example, landscape/portrait screen switching, a related game, or magnetometer posture calibration), performs a vibration recognition related function (for example, a pedometer or a strike), and so on. The sensor 605 may further include a fingerprint sensor, a pressure sensor, an iris sensor, a molecular sensor, a gyroscope, a barometer, a hygrometer, a thermometer, an infrared sensor, and the like. Details are not described herein.

The display unit 606 is configured to display information entered by the user or information provided for the user. The display unit 606 may include the display panel 6061, and the display panel 6061 may be configured in a form of a liquid crystal display (Liquid Crystal Display, LCD), an organic light-emitting diode (Organic Light-Emitting Diode, OLED), or the like.

The user input unit 607 may be configured to receive input digit or character information and generate key signal input related to user settings and function control of the mobile terminal. Specifically, the user input unit 607 includes a touch panel 6071 and other input devices 6072. The touch panel 6071, also called a touch screen, may collect a touch operation of the user on or near the touch panel 6071 (for example, the user uses any suitable object or accessory such as a finger or a stylus to operate on or near the touch panel 6071). The touch panel 6071 may include two parts: a touch detection apparatus and a touch controller. The touch detection apparatus detects a touch direction and position of the user, detects a signal brought by the touch operation, and transmits the signal to the touch controller. The touch controller receives touch information from the touch detection apparatus, converts the touch information into touch point coordinates, and sends the touch point coordinates to the processor 610; and receives and executes a command sent by the processor 610. In addition, the touch panel 6071 may be implemented as a resistive type, a capacitive type, an infrared type, a surface acoustic wave type, or the like. In addition to the touch panel 6071, the user input unit 607 may further include other input devices 6072. Specifically, the another input device 6072 may include but is not limited to a physical keyboard, a function button (such as a volume control button or a power on/off button), a trackball, a mouse, a joystick, and the like. Details are not described herein.

Optionally, the touch panel 6071 can cover the display panel 6061. When detecting a touch operation on or near the touch panel 6071, the touch panel 6071 transmits the touch operation to the processor 610 to determine a type of a touch event. Then, the processor 610 provides corresponding visual output on the display panel 6061 based on the type of the touch event. In FIG. 6, the touch panel 6071 and the display panel 6061 are used as two independent components to implement input and output functions of the mobile terminal. However, in some embodiments, the touch panel 6071 and the display panel 6061 may be integrated to implement the input and output functions of the mobile terminal. This is not specifically limited herein.

The interface unit 608 is an interface connecting an external apparatus to the mobile terminal 600. For example, the external apparatus may include a wired or wireless headset port, an external power supply (or a battery charger) port, a wired or wireless data port, a memory card port, a port for connecting an apparatus having an identification module, an audio input/output (I/O) port, a video I/O port, a headset port, and the like. The interface unit 608 may be configured to receive an input (for example, data information and power) from an external apparatus and transmit the received input to one or more elements in the mobile terminal 600 or may be configured to transmit data between the mobile terminal 600 and an external apparatus.

The memory 609 may be configured to store a software program and various data. The memory 609 may mainly include a program storage area and a data storage area. The program storage area may store an operating system, an application (for example, a sound play function or an image play function) required for at least one function, and the like. The data storage area may store data created based on use of the mobile phone (for example, audio data and a phone book), and the like. In addition, the memory 609 may include a high-speed random access memory, and may further include a nonvolatile memory, for example, at least one disk storage device, a flash memory, or another *volatile* solid-state storage device.

The processor 610 is a control center of the mobile terminal, and is connected to all parts of the entire mobile terminal by using various interfaces and lines, and performs various functions of the mobile terminal and processes data by running or executing the software program and/or the module that are/is stored in the memory 609 and invoking the data stored in the memory 609, to implement overall monitoring on the mobile terminal. The processor 610 may include one or more processing units. Optionally, the processor 610 may be integrated with an application processor and a modem processor. The application processor mainly processes the operating system, the user interface, applications, etc. The modem processor mainly processes wireless communication. It should be understood that the modem processor may be not integrated in the processor 610.

The mobile terminal 600 may further include the power supply 611 (for example, a battery) that supplies power to each component. Optionally, the power supply 611 may be logically connected to the processor 610 by using a power management system, so as to implement functions such as charging management, discharging management, and power consumption management by using the power management system.

In addition, the mobile terminal 600 includes some function modules not shown, and details are not described herein.

Optionally, an embodiment of the present disclosure further provides a mobile terminal, including: a processor, a memory, and a program stored in the memory and executable on the processor. When the program is executed by the processor, the processes of the foregoing editing method embodiment are implemented, and a same technical effect can be achieved. To avoid repetition, details are not described herein again.

An embodiment of the present disclosure further provides a computer-readable storage medium. The computer-readable storage medium stores a program. When the program is executed by a processor, the processes of the foregoing editing method embodiment are implemented, and a same technical effect can be achieved. To avoid repetition, details are not described herein again. The computer readable storage medium is, for example, a read-only memory (Read-Only Memory, ROM), a random access memory (Random Access Memory, RAM), a magnetic disk, or an optical disc.

It should be noted that, in this specification, the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more restrictions, an element defined by a phrase "including a ......" does not exclude presence of other identical elements in the process, method, article, or apparatus that includes the very element.

By means of the foregoing description of the embodiments, a person skilled in the art may clearly understand that the method in the foregoing embodiments may be implemented by software with a necessary general hardware platform. The method in the foregoing embodiments may also be implemented by hardware. However, in many cases, the former is a preferred implementation. Based on such an understanding, the technical solutions of the present disclosure essentially or the part contributing to the prior art may be implemented in a form of a software product. The computer software product is stored in a storage medium (such as a ROM/RAM, a magnetic disk, or an optical disc), and includes several instructions for enabling a terminal (which may be a mobile phone, a computer, a server, an air conditioner, a network device, or the like) to perform the methods described in the embodiments of the present disclosure.

The embodiments of the present disclosure are described above with reference to the accompanying drawings, but the present disclosure is not limited to the foregoing specific implementations. The foregoing specific implementations are merely illustrative but not restrictive. Under enlightenment of the present disclosure, a person of ordinary skill in the art may make many forms without departing from the principles of the present disclosure and the protection scope of the claims, all of which fall within the protection of the present disclosure.

## Claims

1. An editing method, applied to a mobile terminal, wherein the mobile terminal comprises a first screen and a second screen, and the method comprises:
receiving a first input by a user for the first screen, wherein a thumbnail object of at least one to-be-operated object is displayed on the first screen;
controlling, in response to the first input, the thumbnail object of the at least one to-be-operated object to be in an editable state;
receiving a second input by the user for a first target thumbnail object in the editable state on the first screen; and
displaying, in response to the second input, a first target to-be-operated object corresponding to the first target thumbnail object on the second screen.

2. The editing method according to claim 1, wherein after the displaying, in response to the second input, a first target to-be-operated object corresponding to the first target thumbnail object on the second screen, the method further comprises:
receiving a third input by the user for a second target thumbnail object in the editable state on the first screen; and
performing, in response to the third input, a preset editing operation on a second target to-be-operated object corresponding to the second target thumbnail object.

3. The editing method according to claim 2, wherein the performing a preset editing operation on a second target to-be-operated object corresponding to the second target thumbnail object comprises:
performing a delete operation on the second target to-be-operated object corresponding to the second target thumbnail object.

4. The editing method according to claim 1, wherein in the case that a to-be-operated object is a short message, the thumbnail object is a thumbnail comprising at least partial content of the to-be-operated object; or in the case that a to-be-operated object is a picture, the thumbnail object is a thumbnail of the to-be-operated object.

5. A mobile terminal, comprising a first screen and a second screen, and further comprising:
a first receiving module, configured to receive a first input by a user for the first screen, wherein a thumbnail object of at least one to-be-operated object is displayed on the first screen;
a first response module, configured to control, in response to the first input, the thumbnail object of the at least one to-be-operated object to be in an editable state;
a second receiving module, configured to receive a second input by the user for a first target thumbnail object in the editable state on the first screen; and
a second response module, configured to display, in response to the second input, a first target to-be-operated object corresponding to the first target thumbnail object on the second screen.

6. The mobile terminal according to claim 5, further comprising:
a third receiving module, configured to after the first target to-be-operated object corresponding to the first target thumbnail object is displayed on the second screen in response to the second input, receive a third input by the user for a second target thumbnail object in the editable state on the first screen; and
a third response module, configured to perform, in response to the third input, a preset editing operation on a second target to-be-operated object corresponding to the second target thumbnail object.

7. The mobile terminal according to claim 6, wherein the third response module is specifically configured to perform a delete operation on the second target to-be-operated object corresponding to the second target thumbnail object.

8. The mobile terminal according to claim 5, wherein in the case that a to-be-operated object is a short message, the thumbnail object is a thumbnail comprising at least partial content of the to-be-operated object; or in the case that a to-be-operated object is a picture, the thumbnail object is a thumbnail of the to-be-operated object.

9. A mobile terminal, comprising a processor, a memory, and a program stored in the memory and executable on the processor, wherein when the program is executed by the processor, steps of the editing method according to any one of claims 1 to 4 are implemented.

10. A computer-readable storage medium, wherein the computer-readable storage medium stores a program, and when the program is executed by a processor, steps of the editing method according to any one of claims 1 to 4 are implemented.
